# EUROPEAN PATENT APPLICATION

(11) **EP 0 657 515 A2**
(43) Date of publication of application: **14.06.1995**
(21) Application number: 94308764.3
(22) Date of filing: 28.11.1994
(51) Int. Cl.: C09D 143/04, C09J 143/04

(54) **Method and compositions for bonding moisture cured organosiloxane elastomers to organic polymers**

(30) Priority: 02.12.1993 US 160132
(71) Applicant: DOW CORNING CORPORATION, Midland, Michigan 48686-0994 (US)
(72) Inventor: Larson, Kent Robert, Midland, Michigan (US)
(74) Representative: Bullows, Michael

(57) **Abstract**

Adhesion promoting compositions are disclosed herein for bonding a layer of organic polymer to a layer of organosiloxane elastomer during curing of the elastomer in the presence of moisture. Our compositions comprise a solubilized copolymer comprising units derived from at least one ethylenically unsaturated organic compound and at least one silane containing an ethylenically unsaturated organic group and at least two silicon-bonded hydrolyzable groups per molecule. If greater bonding strength is desired, our composition further comprises an organohydrogensiloxane, an alkyl orthosilicate and an organotitanium compound.

## Description

This invention relates to a method for cohesively bonding organic polymer substrates to organosiloxane elastomers during the curing of the moisture-curable compositions used to form said elastomers. The adhesion promoting compositions used in this invention do not contain the objectionable ingredients of some prior art compositions used for bonding such elastomers to organic polymers.

A disadvantage that may prevent wide acceptance of adhesion promoting compositions described in Unites States Patent Nos. 4,795,775 and 4,719,262 is the toxicity of some organosilicon compounds containing the bis-silylalkane group that can be present in these compositions. Organosilicon compounds containing the bis-silylethane group, represented by the formula ≡SiCH₂CH₂Si≡, are particularly undesirable. This disadvantage has stimulated a search for less toxic organosiloxane adhesion promoters suitable for use with organosiloxane compositions that cure by a platinum catalyzed hydrosilation reaction.

Primer compositions containing various combinations of organosilicon compounds with alkyl orthosilicates and/or organohydrogensiloxanes are described in the prior art, including US-A 4,491,650; US-A 4,900,362; CA-A 2,069,564 and JP-A 3/028283.

Our invention defines a class of adhesion promoting compositions that will provide the excellent bonding characteristic of compositions containing bis(trialkoxysilyl)alkane units without the toxicity normally associated with these compounds.

The present invention provides an adhesion-promoting primer composition comprising a copolymer derived from at least one ethylenically unsaturated organic compound and at least one silane containing an ethylenically unsaturated organic group bonded to silicon through carbon and at least two silicon-bonded hydrolyzable groups per molecule.

These primer compositions are particularly suitable for achieving bonding between elastomers prepared from moisture curable organosiloxane compositions and the amorphous or "glassy" types of organic polymers such as polymethyl methacrylates and polycarbonates. A preferred application for laminates prepared using the present method is as windows, wind screens and other structures requiring optical clarity.

This invention provides a method for bonding an organic polymer substrate to a cured organosiloxane elastomer during the curing of said elastomer in the presence of atmospheric moisture, said method comprising the steps of 1) coating a bonding surface of at least one of the organic polymer substrates and the uncured organosiloxane elastomer with a liquid adhesion-promoting composition, 2) placing the bonding surfaces of the organic polymer substrate and the uncured organosiloxane elastomer in contact with one another and 3) curing the organosiloxane elastomer by exposure to moisture, where said composition comprises at least 5 weight percent of said composition of a copolymer comprising units derived from a) an ethylenically unsaturated organic compound, and b) a silane of the formula YR¹ₐSiX₃₋ₐ, where R¹ represents a monovalent hydrocarbon radical, X represents a hydrolyzable group, Y represents an ethylenically unsaturated organic group that is bonded to the silicon atom of said silane through an alkylene radical and a is 0 or 1, said adhesion-promoting composition being characterized by the absence of compounds containing the bis-silylalkane group.

When the cured elastomer has a tear strength greater than about 40 pounds per inch (7 kN/m) the adhesion-promoting composition further comprises an orthosilicate of the general formula (R²O)₄Si where R² represents an alkyl or alkoxyalkyl radical, (2) an organohydrogensiloxane containing an average of at least three silicon-bonded hydrogen atoms per molecule and (3) an organotitanium compound.

This invention also provides laminated composites comprising a layer of organic polymer substrate and a layer of a moisture cured organosiloxane elastomer. The layers are bonded using an adhesion promoting composition of the present invention.

The ingredients of the adhesion-promoting composition used in the present method include an organic/organosiloxane copolymer containing repeating units derived from 1) at least one silane containing an average of at least two silicon-bonded hydrolyzable groups and at least one ethylenically unsaturated organic group per molecule and 2) at least one ethylenically unsaturated organic compound that is copolymerizable with said silane by a free radical reaction.

The copolymers present in the adhesion promoting compositions of this invention and methods for preparing them are described in US-A 3,306,800.

The ethylenically unsaturated organic compound used to prepare our organic/organosiloxane copolymers can be any organic compound containing at least one polymerizable carbon-to-carbon double bond per molecule. Suitable classes of ethylenically unsaturated compounds include 1) hydrocarbons such as ethylene, propylene, butadiene and styrene, and 2) esters derived from ethylenically unsaturated carboxylic acids or alcohols, particularly esters of acrylic and methacrylic acids and alcohols containing from 1 to 5 carbon atoms.

Esters derived from acrylic or methacrylic acid and alcohols containing from 1 to 4 carbon atoms are the preferred ethylenically unsaturated compounds.

The other class of reactants used to prepare our copolymers are silanes containing both hydrolyzable groups and at least one ethylenically unsaturated group. These silanes can be represented by the formula YR¹ₐSiX₃₋ₐ, where R¹ represents an unsubstituted or substituted monovalent hydrocarbon radical, X represents a hydrolyzable group, Y represents an ethylenically unsaturated organic group that is bonded to the silicon atom of the silane through an alkylene radical and a is 0 or 1.

The monovalent hydrocarbon radicals represented by R¹ are alkyl such as methyl and ethyl, substituted alkyl such as 3,3,3-trifluoropropyl, cycloalkyl such as cyclohexyl and aryl such as phenyl. If substituents are present, these are preferably halogen atoms. Preferred hydrocarbon radicals are alkyl containing from 1 to 4 carbon atoms, phenyl and 3,3,3-trifluoropropyl. This preference is based on the availability of the chlorosilanes or other intermediates used to prepare the silane reactant.

In preferred embodiments of this silane, reactant X represents an alkoxy group containing from 1 to 5 carbon atoms, Y represents a (meth)acryloxyalkyl group and a is 0. Most preferably X is methoxy or ethoxy and Y is 3-methacryloxypropyl. When R¹ is present, it is preferably alkyl containing from 1 to 4 carbon atoms, most preferably methyl.

The molar ratio of units in the copolymer derived from the ethylenically unsaturated organic compound to units derived from the silane is typically from 10:1 to 30:1. This ratio is preferably about 20:1, which is equivalent to 95 mole percent of the organic compound, based on total monomers. The reactants used to prepare the copolymer preferably include about one mole percent of a mercapto-functional silane such as 3-mercaptopropyl-trimethoxysilane as a chain terminating agent to control the molecular weight of the copolymer.

The copolymer is typically prepared by a free radical initiated polymerization of the ethylenically unsaturated reactants. The free radicals can be generated photochemically by decomposition of a photoinitiator in the presence of ultraviolet light or by the thermally induced decomposition of an organic peroxide. Methods for conducting free radical polymerizations are sufficiently well known that a detailed discussion is not required as part of the present specification.

The copolymer constitutes at least 5 weight percent, preferably from 10 to 50 weight percent, of the present adhesion-promoting compositions.

The adhesion provided by the solubilized organic/organosiloxane copolymers may be insufficient to provide 100 percent cohesive failure between organic polymers and cured organosiloxane elastomers with tear strengths greater than 40 pounds per inch (7kN/m). In this case it may be preferable to add an orthosilicate such as n-propyl orthosilicate and a catalytic amount of an organotitanium compound to increase the adhesion imparted by our compositions. For maximum adhesion an organohydrogensiloxane may also be required as an ingredient of our adhesion-promoting composition.

The alkyl orthosilicate can be represented by the general formula (R²O)₄Si, where R² represents an alkyl or alkoxyalkyl radical containing from one to ten carbon atoms. The four R²O groups bonded to silicon can be identical or different. In preferred embodiments, the R²O groups are identical and contain from 1 to 4 carbon atoms or are alkoxyalkyl radicals such as 2-methoxyethyl. The alkoxy groups are most preferably methoxy or ethoxy. When required, the alkyl orthosilicate constitutes from 1.5 to 5 weight percent of the adhesion promoting compositions used in accordance with our method.

The organotitanium compound can be any of those typically used to catalyze the moisture initiated hydrolysis of siloxanes and silanes containing alkoxy or other hydrolyzable groups. Suitable titanium compounds include titanium naphthenate, titanium esters such as tetrabutyl titanate, tetra-2-ethylhexyl titanate, tetraphenyl titanate, triethanolamine titanate, organosiloxytitanium compounds such as those described in US-A 3,294,739 and beta-dicarbonyl titanium compounds such as those described in US-A 3,334,067. Preferred catalysts include tetrabutyl titanate, tetraisopropyl titanate, bis-(acetylacetonyl)-diisopropyltitanium and 2,5-di-isopropoxy-bis-ethylacetoacetate titanium.

When present, the organotitanium compound constitutes from 0.01 to 1 percent by weight, preferably about 0.1 percent, of our adhesion-promoting compositions.

The organohydrogensiloxanes that can be present as an optional ingredient of the present adhesion promoting compositions contain an average of at least three silicon-bonded hydrogen atoms per molecule.

The silicon-bonded organic groups present in the organohydrogensiloxane are selected from the same monovalent hydrocarbons and substituted hydrocarbon radicals as R¹ substituents of the silane reactant used to prepare ingredient A, with the proviso that the organic groups in the organohydrogensiloxane must be substantially free of ethylenic or acetylenic unsaturation. If more than one hydrocarbon radical is present on any one silicon atom of the organohydrogensiloxane, these can be identical or different. The silicon-bonded hydrocarbon radicals are preferably alkyl containing from 1 to 4 carbon atoms, phenyl or 3,3,3-trifluoropropyl. Most preferably at least one of the hydrocarbon radicals bonded to each silicon atom is methyl.

The molecular structure of the organohydrogensiloxane can be straight chain, branch-containing straight chain, cyclic or network.

The silicon-bonded hydrogen atoms of the organohydrogensiloxane can be located at the terminal as well as the non-terminal positions of the siloxane molecule. Preferably at least 80 percent of the non-terminal siloxane units contain a silicon-bonded hydrogen atom. Satisfactory adhesion of the cured organosiloxane composition to the organic polymer substrate is not obtained below this range. If only a portion of the siloxane units of the organohydrogensiloxane contain silicon bonded hydrogen atoms, the remaining units can be monoorganosiloxane, diorganosiloxane, triorganosiloxy or a combination of two or more of these units.

While the molecular weight of the organohydrogensiloxane is not specifically restricted, viscosities in the range of 3 to 10,000 centipoise (0.003 to 10 Pa·s) at 25°C. are preferred.

When the organohydrogensiloxane is present it constitutes from 0.5 to 5 weight percent of the present adhesion promoting compositions.

The primer compositions of this invention are prepared by dissolving the organic/organosiloxane copolymer together with the optional orthosilicate, organohydrogensiloxane and organotitanium compound in a suitable organic liquid to form a solution containing from 5 to 50 weight percent, preferably from 10 to 30 weight percent, of the copolymer. The optional alkyl orthosilicate, organohydrogen-siloxane and organotitanium compound would also be added at this time. In addition to being a solvent, the organic liquid must not react with the copolymer or the two optional ingredients of the primer.

Preferred solvents for the copolymer and optional ingredients have a vapor pressure of at least 13.3 kPa (100 mm. Hg) at 25°C., which allows them to evaporate relatively rapidly under ambient conditions. Suitable solvents include hydrocarbons such as pentane, hexane, toluene and xylene, mixtures of hydrocarbons such as naphtha and mineral spirits and alcohols containing from 1 to 8 carbons. Ethylenically unsaturated alcohols such as 1-butenol and 2-methyl-3-buten-2-ol are particularly preferred.

A thin coating of our composition is applied to at least one of the substrates to be bonded, namely the organic polymer and/or the moisture curable organosiloxane composition. After the solvent has evaporated and sufficient time has elapsed to allow at least partial hydrolysis of the alkoxy groups present on the copolymer by atmospheric moisture, the substrates are placed in contact with one another and the organosiloxane portion of the resultant composite is allowed to cure. Depending upon the relative humidity in the area adjacent to the composite, curing requires from 16 to 48 hours. In preferred composites, the layer of curable organosiloxane elastomer is placed between two or more layers of organic polymers.

Organosiloxane elastomers that can be bonded to organic polymer substrates using our adhesion promoting compositions cure in the presence of atmospheric moisture by the reaction of a polyorganosiloxane containing at least two silanol or silicon-bonded hydrolyzable groups with an organosilicon compound containing at least three silicon-bonded alkoxy or other hydrolyzable groups.

The polyorganosiloxanes containing at least two silanol or silicon-bonded hydrolyzable groups per molecule can be linear or branched. The repeating units of the polyorganosiloxanes can be represented by the general formula R²_{b}SiO_{(4-b)/2}, where R² represents an unsubstituted or substituted monovalent hydrocarbon radical and b is 1 or 2. When b is 2 the hydrocarbon radicals represented by R² can be identical or different. The polyorganosiloxane can contain one, two or more different types of repeating units. Hydrocarbon radicals that can be represented by R² are alkyl such as methyl and ethyl, substituted alkyl such as chloromethyl and 3,3,3-trifluoropropyl, cycloalkyl such as cyclohexyl, aryl such as phenyl and aralkyl such as benzyl.

The groups on the polyorganosiloxane that react with the curing agent in the presence of moisture to cause curing of this ingredient can be silanol groups or silicon-bonded hydrolyzable groups such as acyloxy, alkoxy, ketoximo or aminoxy.

Preferred moisture curable elastomers contain as the polyorganosiloxane ingredient one or more liquid polydiorganosiloxanes containing silanol groups at the terminal positions.

Curing agents for the polyorganosiloxane ingredient of our moisture curable organosiloxane elastomers are typically organosilicon compounds containing an average of at least three silicon-bonded hydrolyzable groups per molecule. Preferred hydrolyzable groups are alkoxy containing from 1 to 4 carbon atoms, acetoxy and ketoximo such as methylethylketoximo. A catalyst such as an organotitanate or an organotin compound is typically included to accelerate the curing reaction.

The organosilicon compound that serves as the curing agent can be a silane, disiloxane or a polyorganosiloxane. Silanes are generally preferred, based on their cost and availability. Preferred silanes include methyltrimethoxysilane, methyltriethoxysilane, methyltriacetoxysilane and methyltri(methylethylketoximo)silane.

The preparation and curing reactions of moisture curable organosiloxane elastomers are sufficiently well known, that a detailed discussion of this topic in the present specification would be superfluous. A discussion of this subject can be found in texts such as Organosilicon Chemistry by Eaborne.

In addition to being useful as primer compositions, the present organic/organosiloxane copolymers alone or in combination with optional ingredients, can be included as adhesion promoters in moisture curable organosiloxane elastomers that are cured in contact with at least one layer of an organic polymer. In this instance, the solvent typically required for primer compositions can be omitted. The moisture curable elastomer containing our adhesion promoting additive(s) is then placed in contact with at least one layer of an organic polymer and the resultant composite is allowed to cure under ambient conditions. Assuming no substantial change in relative humidity, the cure rate of the present moisture curable compositions will increase as the ambient temperature is increased.

Organic polymers that can be bonded to organosiloxane elastomers using the adhesion promoting compositions of this invention are not restricted. Suitable polymers include: addition type polymers, including polyolefins such as polyethylene and polypropylene, polymers derived from other ethylenically unsaturated organic compounds such as styrene and esters of ethylenically unsaturated acids, such as lower alkyl eaters of acrylic and methacrylic acids; condensation type polymers, including polyesters such as polyethylene terephthalate, polybutylene terephthalate, polyamides and polycarbonates.

When used as primer compositions, the adhesion promoting compositions of our invention are particularly suitable for bonding amorphous polymers such as polymethyl methacrylate and polycarbonates to moisture curable organosiloxane compositions. A preferred class of polycarbonates are prepared from phosgene and bis-phenols such as Bisphenol A, 2,2-bis(4-hydroxyphenyl)propane.

The following examples describe preferred adhesion promoting compositions, curable organosiloxanes and organic polymers that can be used to form novel and inventive composites. Unless otherwise specified, all parts and percentages in the examples are by weight and all viscosities were measured at 25°C.

Primer compositions were prepared by blending the ingredients, including the 2-methyl-3-buten-2-ol solvent, to homogeneity, which typically required about ten seconds of mixing. The ingredients evaluated are represented by the following abbreviations:

MMA/MPTMS - a copolymer prepared by reacting methyl methacrylate and 3-methacryloxypropyltrimethoxysilane in a molar ratio of 10:1, respectively, in the presence of 1 percent by weight, based on total monomers, of mercaptopropyltrimethoxysilane and 1 percent by weight of benzoyl peroxide. These reactants were dissolved or suspended in an amount of ethyl acetate equivalent to 79 weight percent of the total mixture during the polymerization. Following completion of the polymerization the ethyl acetate was removed by distillation while the amount of 2-methyl-3-buten-2-ol required for a 10 weight percent solution of the copolymer was added.

The organic polymers used as the substrates to which our primer compositions and our moisture curable organosiloxane elastomers were applied were optically transparent sheets of polymethyl methacrylate (PMMA) and a polycarbonate (PC) derived from bis-phenol A. The sheets measured 5 by 15 cm.

All of the organic polymer substrates were cleaned using methanol and the alcohol allowed to evaporate. A coating of the primer composition to be evaluated was then applied to one surface and the solvent allowed to evaporate for 60 minutes under ambient conditions, which were typically a temperature of 22°C. and a relative humidity of 50%. The curable organosiloxane elastomer to be evaluated was then applied as a layer of 0.060 inch (1.5 mm) in thickness. The test samples were then allowed to cure under ambient temperature and humidity for 24 hours.

The adhesion of the cured elastomer to the organic polymer was evaluated by making a series of parallel incisions through the entire thickness of the cured elastomer using a razor blade. The incisions were spaced from 0.125 to 0.25 inch (0.32 to 0.64 cm) apart. A metal spatula was then inserted in the area of the incisions and used to pry the cured elastomer away from the organic polymer substrate. If the cured elastomer tore without separating from the surface of the substrate at the interface, this was rated as 100 percent cohesive failure. If cured elastomer could be removed from the substrate intact without tearing and without leaving any of the elastomer adhering to the surface of the substrate, this was rated as 0 percent cohesive failure.

The curable organosiloxane elastomers evaluated are identified as I, II, III, IV and V. The elastomers were prepared by blending their respective ingredients to homogeneity.
(I) 73 parts of a silanol-terminated polydimethylsiloxane having a viscosity of 13 Pa·s; 24 parts of a fume silica containing trimethylsilyl groups; 7 parts of methyltrimethoxysilane; and 0.5 part tetrabutyl titanate.
(II) 83 parts of a silanol-terminated polydimethylsiloxane with a viscosity of 16 Pa·s; 10 parts of a fume silica having a nominal surface area of 250 m² per gram; 4 parts of a 1:1 weight ratio mixture of methyltriacetoxysilane and ethyltriacetoxysilane; 0.1 part of dibutyltin diacetate; and 1 part of titanium dioxide.
(III) 77 parts of a polydimethylsiloxane having a viscosity of about 12 Pa·s at 25°C., wherein 90 percent of the terminal groups are silanol and 10 percent are trimethylsiloxy; 11 parts of a fume silica; 6 parts of methyltri(ethylmethylketoxime)silane; 2 parts of di(ethylmethylketoxime)methoxymethylsilane; 2 parts of 3(B-aminoethylamino)propyltrimethoxysilane; and 1 part of titanium dioxide.
(IV) 55 parts of a silanol-terminated polydimethylsiloxane exhibiting a viscosity of 4 Pa·s; 25 parts of zinc oxide; 14 parts of diatomaceous earth; 2 parts of hydrogenated castor oil; 1.4 part of ethyl polysilicate; 0.1 part dibutyltim diacetate; 0.2 parts titanium dioxide; 3.1 parts of diatomaceous earth; and 6.6 parts of a trimethylsiloxy-terminated polydimethylsiloxane exhibiting a viscosity of 1 Pa·s.
(V) 76 parts of a silanol-terminated polydimethylsiloxane having a viscosity of 13 Pa·s; 21 parts of a fume silica containing trimethylsiloxy groups; 1.5 parts of a silanol-terminated methylphenylsiloxane copolymer with an average degree of polymerization of 2.5; 1 part of pigment; 2.1 parts of ethyl polysilicate; 1.1 parts of dibutyltin dilaurate; 3.2 parts of calcium carbonate; 3.1 parts of a dimethylvinylsiloxy-terminated polydimethylsiloxane having a viscosity of 0.4 Pa·s at 25°C.; and 0.6 part of hydrogenated castor oil.

### Example 1

This example demonstrates the ability of our adhesion promoting compositions to achieve 100 percent cohesive failure when applied between a curable organosiloxane elastomer and either a polymethyl methacrylate or a polycarbonate substrate.

The primer composition was a 10 percent by weight solution of the MMA/MPTMS copolymer in 2-methyl-3-buten-2-ol, referred to hereinafter as methylbutenol.

After curing for 24 hours under ambient conditions 100 percent cohesive failure was achieved when compositions I, II, III and IV were cured in contact with either the polymethyl methacrylate or the polycarbonate substrate.

The primer composition was not able to provide any observable degree of cohesive failure adhesion between either of the organic polymers and organosiloxane elastomer V. This is believed due to the higher tear strength of the cured elastomer, typically 110 pounds per inch (19.3 kN/m), relative to organosiloxane composition IV, which cured by the same reaction and exhibited a tear strength of 30 pounds per inch (5.3 kN/m).

### Example 2

This example demonstrates the utility of the optional alkyl orthosilicate, organohydrogensiloxane and organotitanate in achieving cohesive bonding between organic polymer substrates and cured organosiloxane elastomers with relatively high tear strengths.

The primer compositions contained methylbutenol as the solvent, 15 weight percent of the MMA/MPTMS copolymer, 1 percent by weight of a liquid trimethylsiloxy-terminated polymethylhydrogensiloxane with a silicon-bonded hydrogen content of 1.6 weight percent, 0.1 weight percent tetrabutyl titanate and 1.5 weight percent of one of the following: n-propyl orthosilicate (composition 1), 2-methoxyethyl orthosilicate (composition 2), ethyl orthosilicate (composition 3) or a 1:1 weight ratio mixture of 1 and 2 (composition 4).

The four primer compositions were coated on to individual polymethylmethacrylate substrates and evaluated for adhesion to moisture curable organosiloxane elastomer V. The test samples were prepared and tested in the same manner as the samples described in Example 1.

The results of the evaluation are summarized in the table.

**TABLE**

| Primer Composition | Percent Cohesive Failure |
|---|---|
| 1 | 100 |
| 2 | 30 |
| 3 | 70 |
| 4 | 100 |

The data indicate that the hydrocarbon radical bonded to the silicon atom of the alkyl orthosilicate plays a role in achieving cohesive bonding between organic polymers and high strength moisture curable organosiloxane elastomers. At least 0.7 weight percent of n-propyl silicate was required in the composition of this example.

### Example 3

This example demonstrates the inability of primer compositions containing less than 10 weight percent of our organic/organosiloxane copolymer to achieve cohesive bonding of moisture cured elastomers to organic polymer substrates.

The five primer compositions contained 1, 2, 5, 10 and 50 weight percent of the MMA/MPTMS copolymer described in methylbutenol. The primer compositions were applied to both polymethyl methacrylate and a polycarbonate and allowed to dry for 60 minutes under ambient conditions. Organosiloxane elastomer IV was then applied over the primer and allowed to cure under ambient conditions for 24 hours. The composites prepared using the primers containing 1, 2 and 5 weight percent of the copolymers exhibited 0% cohesive failure. The composites prepared using primers containing 10 and 50 weight percent of the copolymer exhibited 100% cohesive failure.

These results demonstrate the useful range of our organic/organosiloxane copolymer that will provide 100% cohesive failure for elastomers prepared using moisture curable organosiloxane compositions.

## Claims

1. A liquid composition for bonding a layer of moisture cured organosiloxane elastomer to an organic polymer, said composition comprising:
A. at least 5 percent by weight of a copolymer comprising units derived from a) an ethylenically unsaturated organic compound, and b) a silane of the formula YR¹ₐSiX₃₋ₐ, where R¹ represents a monovalent hydrocarbon radical, X represents a hydrolyzable group, Y represents an ethylenically unsaturated organic group that is bonded to the silicon atom of said silane through an alkylene radical and a is 0 or 1, and
B. an amount sufficient to cohesively bond said elastomer to said organic polymer of a mixture comprising at least one organotitanate, at least one orthosilicate corresponding to the formula (R²O)₄Si and at least one organohydrogensiloxane, where R² represents an alkyl or alkoxyalkyl radical containing from one to ten carbon atoms, said composition being characterized by the absence of compounds containing the bis-silylalkane group.

2. A composition according to claim 1 where said copolymer constitutes from 10 to 50 weight percent of said composition, said organic polymer is a polycarbonate or a polyalkyl methacrylate, said ethylenically unsaturated organic compound is an alkyl ester of methacrylic acid, R¹ is methyl, X is an alkoxy group and Y is CH₂=C(R³)C(O)O(CH₂)₃- where R³ is hydrogen or methyl, said organohydrogensiloxane is a triorganosiloxy-terminated alkylhydrogensiloxane, the molar ratio of units in the copolymer derived from the ethylenically unsaturated organic compound to units derived from the silane is from 10 to 30 and said composition further comprises an organic solvent.

3. A composition according to claim 2 where R² is methyl or alkoxymethyl, said organotitanate is selected from tetraalkyl titanates or chelated titanium compounds and said solvent is selected from liquid hydrocarbons or alcohols.

4. A method for bonding an organic polymer to a cured organosiloxane elastomer during curing of said elastomer in the presence of atmospheric moisture, said method comprising the steps of 1) coating a bonding surface of at least one of the organic polymer and the uncured organosiloxane elastomer with the liquid composition of claim 1, 2) placing the bonding surfaces of the organic polymer and the uncured organosiloxane elastomer in contact with one another and 3) curing the organosiloxane elastomer by exposure to moisture.

5. A method according to claim 3 where said solvent is an ethylenically unsaturated alcohol.

6. A laminate comprising a layer of an organic polymer and a layer of a moisture cured organosiloxane elastomer, where the layers of said laminate are bonded by the liquid composition of claim 1.

7. A laminate according to claim 6 where said organic polymer is polymethyl methacrylate or a polycarbonate and is optically transparent, said ethylenically unsaturated organic compound is methyl methacrylate, the alkyl radicals present in said organohydrogensiloxane are methyl, from 80 to 100 percent of the non-terminal silicon atoms of said organohydrogensiloxane contain a silicon-bonded hydrogen atom and said liquid composition contains from 1.5 to 5 weight percent of said orthosilicate, from 0.5 to 5 weight percent of said organohydrogensiloxane, from 0.01 to 1 weight percent of said tetraalkyl titanate.
